**Europäisches Patentamt**

**European Patent Office**

**Office européen des brevets**

(19)

(11) Publication number : **0 432 019 A2**

# (12) EUROPEAN PATENT APPLICATION

(21) Application number : **90403386.7**

(22) Date of filing : **29.11.90**

(51) Int. Cl.$^5$ : **B25B 5/06, B23Q 3/06**

(30) Priority : **07.12.89 JP 320108/89**

(43) Date of publication of application :
**12.06.91 Bulletin 91/24**

(84) Designated Contracting States :
**DE FR GB IT**

(71) Applicant : **KABUSHIKI KAISHA KOSMEK**
**1-2 Murotani 2-Chome, Nishi-ku**
**Kobe-shi, Hyogo (JP)**

(72) Inventor : **Yonezawa, Keitaro**
**c/o K.K. Kosmek, 1-2 Murotani 2-chome**
**Nishi-ku, Kobe-shi, Hyogo (JP)**

(74) Representative : **Bonnetat, Christian**
**CABINET BONNETAT 23, Rue de Léningrad**
**F-75008 Paris (FR)**

(54) **Hydraulic clamp with inclined direct operated clamping-member.**

(57)   In a hydraulic clamp with an inclined direct operated clamping-member, a cylinder bore (8) is formed in a housing (5) in such an inclined manner as forward descending, a piston (9) is inserted into the cylinder bore (8), a clamping actuation hydraulic chamber (14) is formed behind the piston (9) within the cylinder bore (8), and a clamping-member (12) is forward protruded from the upper portion of the piston (9). A spring accommodation hole (17) is so formed as to backward extend from its front surface, and a spring retainer (21) is supported by the housing (5) in front of the piston (9). An unclamping spring (18) is installed between the spring retainer (21) and a spring retaining seat (23) formed in the backmost portion of the spring accommodation hole (17).

FIG.1

# HYDRAULIC CLAMP WITH INCLINED DIRECT OPERATED CLAMPING-MEMBER

## BACKGROUND OF THE INVENTION

### 1. Field of the Invention

The present invention relates to a hydraulic clamp adapted to clamp a fixed member such as a metal mould, a work pallet and the like onto a fixed angular table of an injection moulding machine, a machining center and so on, and more specifically to a hydraulic clamp of the type adapted to direct actuate the clamping-member by a hydraulic piston along a forward descending inclined axis.

### 2. Description of Prior Art

As such a hydraulic clamp, has been known the one disclosed in the Japanese Patent Laid Open Publication No. 1981-163854.

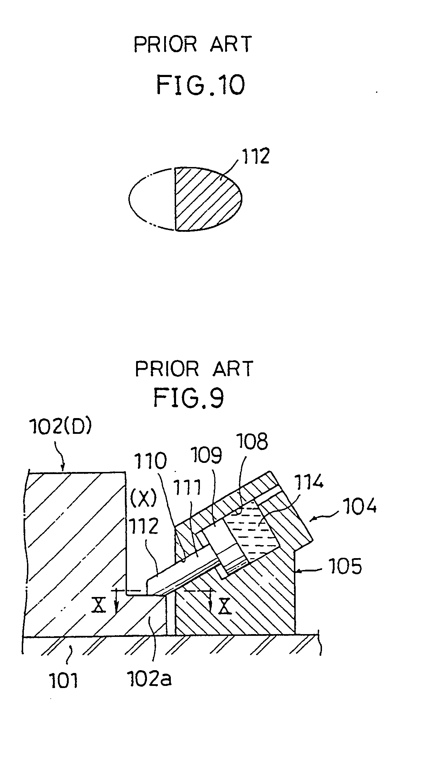

As shown in Figs 9 and 10, its basic construction is as follows.

That is, a cylinder bore 108 is formed in a housing 105 of a hydraulic clamp 104 in such an inclined manner as forward descending therein, and a piston 109 is oil-tightly inserted into said cylinder bore 108 so as to be forward and backward movable therein,

a clamping-member 112 is disposed on the forward side of the piston 109, and said clamping-member 112 is interlockingly connected to the piston 109 so as to be movable together therewith,

a clamping actuation hydraulic chamber 114 is formed in said cylinder bore 108 behind said piston 109,

under the retreated condition of the piston 109, said clamping-member 112 takes an unclamping state in which the clamping-member 112 is retreated to an unclamping position on the slantwise back and upper side, and

to the contrary, under the advanced condition where said piston 109 is forward actuated by a hydraulic pressure in said clamping actuation hydraulic chamber 114, said clamping-member 112 is advanced to a clamping position X on the slantwise fore and lower side so as to take a clamping state in which a fixed portion 102a of a metal mould 102 (a fixed member D) in front of the housing 105 is fixedly clamped by the clamping-member 112 from above.

In the above basic construction, conventionally a guide hole 110 of a smaller diameter than that of the cylinder bore 108 was coaxially formed through the fore lower portion of the cylinder bore 108. A piston rod 111 was inserted into the guide hole 110, and the back portion thereof was fixed to the piston 109 as well as the clamping member 112 was provided in the fore portion of the piston rod 111.

There are the following problems associated with the above-mentioned prior art.

(a) A working accuracy of a process machine is low.

Since a piston rod 111 can't help becoming smaller in outer diameter and in cross-sectional area, its bending rigidity is small. Accordingly, when a pulling-up impact such as a metal mould removing force and a work processing reaction force is imposed to the fixed member D under the condition that the fixed member D is fixedly clamped to the fixed angular table 101 of the process machine, the piston rod 111 and the clamping-member 112 are elastically deformed by the impact force, so that the fixed member D is lifted up from the table 101 and a working accuracy is correspondingly lowered by that pulled-up portion.

(b) A service life of the hydraulic clamp is short.

Since the piston rod 111 having a small diameter and a small cross-sectional area is subjected to a large bending stress acting at the time of clamping, it is apt to be fatigued by an accumulated number of clamping operations and its fatigue strength is small. Accompanied therewith, a service life of the hydraulic clamp is short.

(c) The fixed portion of the fixed member is apt to be damaged.

Since the clamping-member 112 is attached to the piston rod 111 of a small diameter, a clamping surface of the clamping-member 112 can't help becoming small. Therefore, the fixed member D is subjected to a large surface-pressure when being clamped and the fixed portion 102a thereof is apt to be damaged.

## SUMMARY OF THE INVENTION

The present invention has for its objects to enhance a processing accuracy of a process machine, to elongate a service life of a hydraulic clamp, and to prevent a fixed member from being damaged.

For accomplishing the aforementioned objects, the present invention adds the following improvements to the above-mentioned basic construction. That is, at least the upper portion of the surrounding surface of the cylinder bore is so formed as to extend to the fore portion of the housing and to open in the front surface of the housing. The clamping-member is formed by direct protruding the upper portion of the piston toward its forward side. A spring accommodation hole is formed in the piston so as to backward extend from its front surface, and an unclamping spring is accommodated within the spring accommodation hole. A spring retainer is supported by the housing at a forward side of the piston, the fore end portion of said unclamping spring is received by said spring retainer as well as the back end portion thereof is abutted on a spring retaining seat at the backmost portion of the spring accommodation hole.

According to the above-mentioned construction, the following advantages can be provided.

(a) A processing accuracy of a process machine can be enhanced.

Since the clamping-member direct protruded from the piston can be manufactured in a large diameter and have a large cross -sectional area, its bending rigidity becomes larger. Therefore, even when the pulling-up impact force is imposed to the fixed member, an upward elastic deformation of the clamping-member can be small, the fixed member can be prevented from being upward lifted, and the processing accuracy can be enhanced.

(b) A service life of the hydraulic clamp becomes longer.

The clamping-member having a large cross-sectional area is only subjected to a small bending stress at the time of clamping operation, and its fatigue strength becomes larger. Therefore, a service life of the hydraulic clamp becomes longer

(c) The fixed member can be prevented from being damaged.

Since the clamping surface of the clamping-member can be made in a large area, a surface pressure at the fixed portion of the fixed member can be smaller and the fixed portion can be prevented from being damaged.

The above and other important advantages of the present invention will be better understood from the following detailed description of preferred embodiments of the invention, made with reference to the accompanying drawings, in which :

BRIEF DESCRIPTION OF THE DRAWINGS

Figures 1 through 8 show embodiments of the present invention ;

Figures 1 through 6 show a first embodiment ;

Figure 1 is a sectional view taken along the directed line I - I in Fig. 2 ;

Figure 2 is an elevation view showing a metal mould clamped condition in a turn table type injection molding machine ;

Figure 3 is a plan view of Fig. 1 :

Figure 4 is a sectional view taken along the directed line IV - IV in Fig. 1 ;

Figure 5 is a sectional view taken along the directed line V - V in Fig. 1 ;

Figure 6 is a view showing an unclamping condition of a hydraulic clamp ;

Figure 7 shows a second embodiment and is a view corresponding to Fig. 1 ;

Figure 8 shows a third embodiment and a view corresponding to Fig. 1 ;

Figures 9 and 10 show a conventional embodiment ;

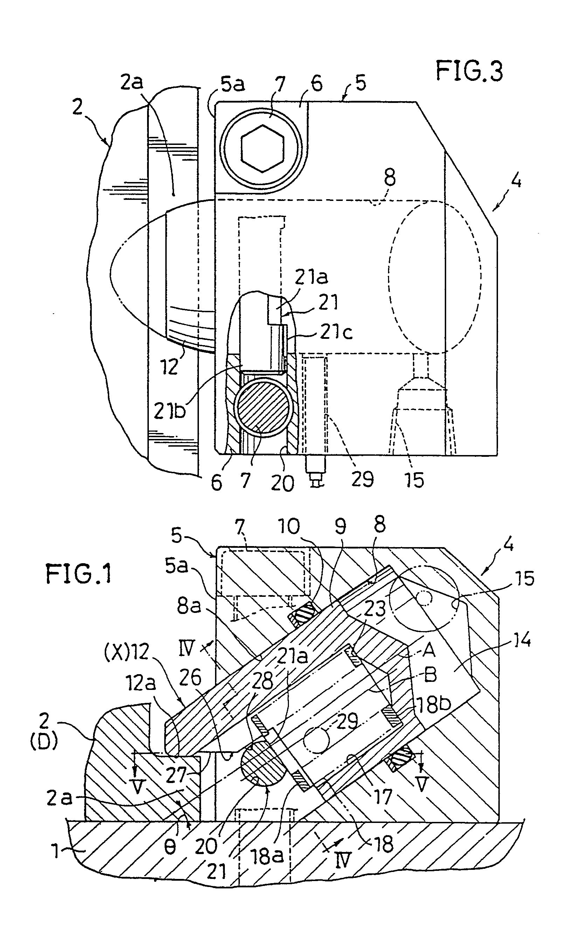

Figure 9 is a view corresponding to Fig. 1 ; and

Figure 10 is a sectional view taken along the directed line X - X in Fig. 9.

DESCRIPTION OF THE PREFERRED EMBODIMENTS

<First Embodiments>

Figs. 1 through 6 show a first embodiment disclosing a device for fixing a metal mould of a turn table type injection moulding machine by means of a hydraulic clamp according to the present invention.

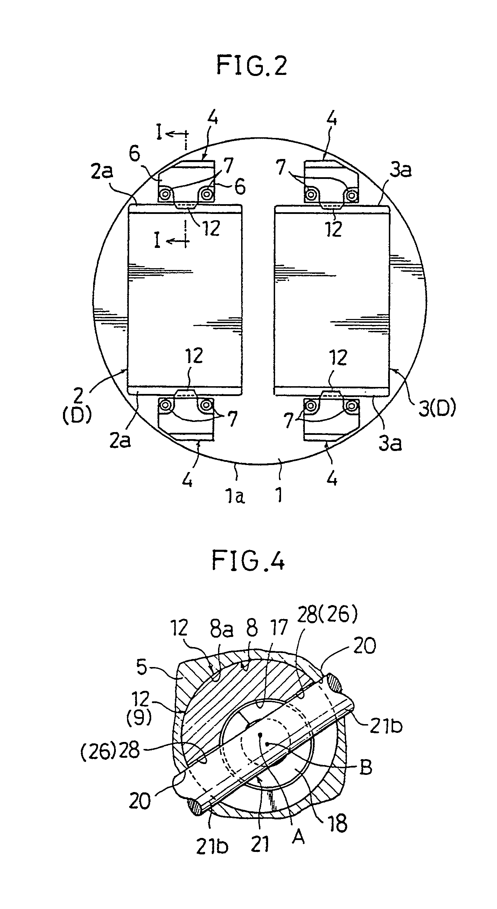

As shown in a general view of Fig. 2 and in a plan view of Fig. 3, a first metal mould 2 and a second metal mould 3 as fixed members D are fixedly clamped onto a circular turn table frame 1 as a fixed table of an injection moulding machine by means of hydraulic clamps 4, 4 respectively. Each hydraulic clamp 4 is fixedly secured to the turn table frame 1 by means of bolts 7, 7 through both side walls 6, 6 of its housing 5. Each clamping member 12 advanced from the housing 5 is adapted to clamp a vertical fixed portion 2a, 3a of each metal mould 2, 3.

For enabling to be installed inside of an external peripheral surface 1a of the turn table frame 1, the hydraulic clamp 4 is so constructed as to advance and retreat the clamping-member 12 in the inclined direction relative to a fixed member D.

That is, as shown in a vertical sectional view of Fig. 1 and in a plan view of Fig. 3, a cylinder bore 8 is formed in the housing 5 of the hydraulic clamp 4 in such an inclined manner as forward descending. An inclination angle $\theta$ of the cylinder bore 8 is preferably defined at an angle of 25 degree to 45 degree in the case that the hydraulic clamp 4 is of a spring return type as shown in the present embodiment. It is most preferable to define it at an angle of ab. 35 degree for making the housing 5 compact. A piston 9 is oil-tightly inserted into the cylinder bore 8 through a packing 10 so as to be movable in the forward and backward directions. A clamping actuation hydraulic chamber 14 is formed within the cylinder bore 8 so as to face the backside of the piston 9. An oil supply and discharge port 15 is intercommunicated to the clamping actuation hydraulic chamber 14. At least an upper portion 8a of the surrounding surface of the cylinder bore 8 is straightly extended to the front portion of the housing 5 and opened in a front surface 5a of the housing 5. The clamping-member 12 is formed by direct protruding the upper portion of the piston 9 toward its forward side and guided by the upper portion 8a of the surrounding surface of the cylinder 8.

A spring accommodation hole 17 is formed in the piston 9 in such a manner as backward extending from the front surface of the piston 9. An axis B of the spring accommodation hole 17 is arranged below an axis A of the piston 9. An unclamping spring 18 composed of a compression spring is accommodated within the spring accommodation hole 17.

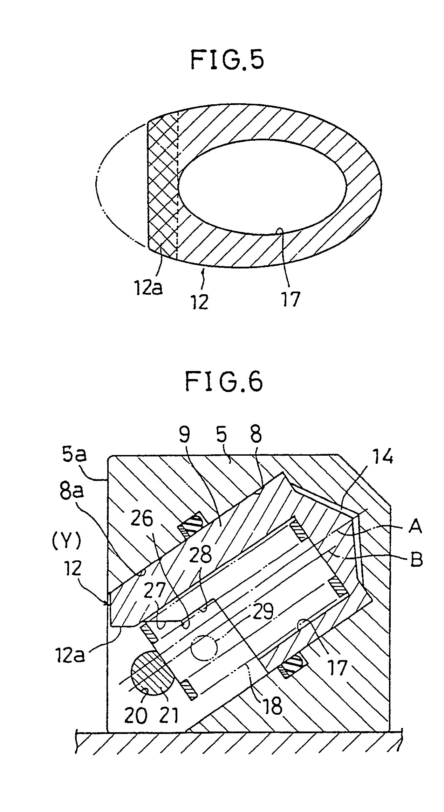

That is, as shown in Figs. 1 and 3 and Fig. 4, pin insertion holes 20, 20 are transversely formed in the fore lower portions of both side walls 6, 6 of the housing 5. A spring retainer 21 composed of a pin is so disposed as to cross over both the clamping-member 12 and the spring accommodation hole 17, and its opposite end portions 21b, 21b are supported by both the pin insertion holes 20, 20. The spring retainer 21 is anchored by means of bolts 7, 7. A spring fore end portion 18a of the unclamping spring 18 is received by a belly portion 21a of the spring retainer 21, and spring back end portion 18b is received by a spring retaining seat 23 formed at the backmost position of the spring accommodation hole 17. The clamping-member 12 is provided at its lateral side portions with left and right paired admittance grooves 26, 26 so formed as to be opened in its front surface for preventing an interference with the spring retainer 21. Each admittance groove 26 comprises a slot groove 27 formed above the clamping surface 12a of the clamping-member 12 facing downward (refer to Fig. 5 and Fig. 1) and a guide groove 28 formed along the axis A of the piston 9 which are interconnected to each other in the forward and backward direction.

The aforementioned hydraulic clamp 4 operates as follows.

Under the unclamped condition as shown in Fig. 6, a pressurized oil is discharged from the clamping actuation hydraulic chamber 14, and the piston 9 is retreated by means of the resilient force of the unclamping spring 18. Under this condition, the clamping-member 12 is retreated to the unclamping position Y on the slantwise back and upper side, and the clamping surface 12a thereof is retracted into the inside of the front surface 5a of the housing 5. Each guide groove 28 of the admittance groove 26 is spaced apart from the external surrounding surface of the spring retainer 21 to the back side along the axis A of the piston 9.

To the contrary, when changing over from the unclamped condition as shown in Fig. 6 to the clamped condition as shown in Fig. 1, the pressurized oil is supplied to the clamping actuation hydraulic chamber 14. Thereupon, the piston 9 is actuated forward by means of the pressurized oil, so that the clamping-member 12 is advanced to the clamping position X on the slantwise fore and lower side outside the front surface 5a of the housing 5. Thereby, the fixed portion 2a of the metal mould 2 is fixedly clamped onto the turn table frame 1 from above through the clamping surface 12a of the clamping-member 12. At the end stage of the forward actuation when the clamping-member 12 is actuated to the clamping position X as mentioned above, the clamping-member 12 is guided by the respective external surrounding surfaces of the opposite end portions 21b, 21b of the spring retainer 21 through both the guide grooves 28, 28 under the turning restrained condition about the axis A. Piston receiving portions 21c near the opposite end portions of the spring retainer 21 serve to restrain the piston 9 from being actuated forward farther than a predetermined distance.

Incidentally, in the case that a height dimension of the fixed portion 2a of the fixed member D as a thickness of the portion to be clamped is large, height adjusting adapter plates (not illustrated) are correspondingly put between the lower surface of the housing 5 and the turn table frame 1 so as to be readily suited to a change of the clamped thickness.

A limit switch 29 is secured to one side wall 6 of the housing 5 by means of screws in such a lateral state as facing the cylinder bore 8. By detecting the position of the piston 9 by means of the limit switch 29, it can be judged whether the hydraulic clamp 4 is in the clamping condition or in the unclamping condition.

According to the above-mentioned construction, the following advantages can be provided.

Since the clamping-member 12 direct protruded from the piston 9 can be manufactured in a large diameter substantially equal to that of the piston 9 and also have a large cross-sectional area, its bending rigidity is large.

Accordingly, an upward elastic deformation of the clamping-member 12 can be small even in the case that the pulling-up impact force such as a metal mould removing force, a work processing reaction force and the like is imposed to the fixed member D under the condition that the fixed member D is fixedly clamped onto the fixed angular table 1 of the process machine.

As a result, the fixed member D can be prevented from being lifted up from the fixed angular table 1 and the processing accuracy can be enhanced.

Then, since the clamping-member 12 having the large diameter and the large cross-sectional area is large in modulus of section and its bending stress imposed at the time of clamping can be small, it is hardly fatigued even though the number of clamping operations is accumulated and its fatigue strength is large. Accompanied therewith, a service life of the hydraulic clamp becomes longer.

Further, since the clamping-member 12 having a large cross-sectional can have the clamping surface 12a formed in a large area, a surface pressure in the fixed portion 2a of the fixed member D at the time of clamping can be small, a damage of the fixed portion 2a can be prevented.

By displacing the axis B of the spring accommodation hole to the lower side, the following advantages can be provided.

Since the cross-sectional area of the clamping-member 12 becomes further larger, the aforementioned respective advantages can be further enhanced. Then, since the spring retainer 21 can be located on the back and lower side while the guide length for the piston 9 is kept in a certain dimension, the length of the housing 5 in the forward and backward direction becomes correspondingly shorter by that portion and the overall length of the hydraulic clamp can be shortened. Further, due to an eccentricity between the piston axis A and the bore axis B, an abutting friction force of the unclamping spring 18 prevents the piston 9 from being turned with respect to the spring accommodation hole 17. Therefore, the clamping-member 12 can be prevented from being turned at the time of clamping actuation, and an uneven contact to the fixed member D can be eliminated. As a result, an occasional movement and a damage of the fixed member D caused by such uneven contact can be prevented.

Further, since the spring-retainer 21 serves to stop a turning of the aforementioned clamping-member 12 at the time of clamping actuation, an uneven contact between the clamping-member 12 and the fixed member D can be prevented. As a result, an occasional movement and a damage of the fixed member D caused by such uneven contact can be further surely prevented.

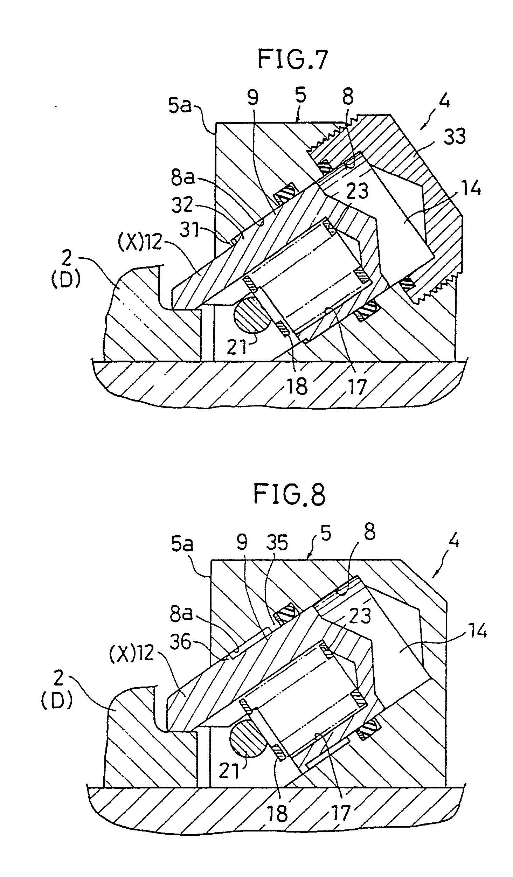

Fig. 7 and Fig. 8 are views corresponding to Fig.1 for showing other embodiments respectively, and constructions different from the aforementioned first embodiment will be explained. Component members having the same construction as those in the first embodiment are designated by the same symbols in the respective embodiments.

<Second Embodiment>

Fig. 7 shows a second embodiment.

In this case, the fore portion of the cylinder bore 8 is a little reduced in diameter, and the outer diameter of the clamping-member 12 is made smaller than that of the piston 9. At the time of clamping operation, a shoulder portion 32 of the piston 9 is received by a stepped-down portion 31 of the cylinder bore 8. By the way, a back end wall of the clamping actuation hydraulic chamber 14 is provided with a hydraulic chamber cover 33 fixedly secured to the housing 5 by means of a screw.

According to the above-mentioned construction, when the hydraulic clamp 4 is assembled, the assembly work becomes easy because the hydraulic chamber cover 33 is merely threadably engaged with the housing 5 after the unclamping spring 18 and the piston 9 have been installed within the housing 5.

<Third Embodiment>

Fig. 8 shows a third embodiment.

In this case, the fore portion of the cylinder bore 8 is a little expanded in diameter as well as the outer diameter of the clamping-member 12 is made larger than that of the piston 9. At the time of unclamping operation, a shoulder portion 36 of the piston 9 is received by a stepped-up portion 35 of the cylinder bore 8.

According to this construction, since the modulus of section of the clamping-member 12 becomes larger, the metal' mould 2 as the fixed member D is more strongly secured onto the table.

As many different embodiments of the invention will be obvious to those skilled in the art, some of which have been disclosed or referred to therein, it is to be understood that the specific embodiments of the invention as presented herein are intended to be by way of illustration only and are not limiting on the invention, and it is to be understood that such embodiments, changes, or modifications may be made without departing from the spirit and scope of the invention as set forth in the claims appended hereto.

## Claims

1. A hydraulic clamp with an inclined direct operated clamping-member, including a housing (5) of a hydraulic clamp (4) having a cylinder bore (8) formed in such an inclined manner as forward descending therein, a piston (9) being oil-tightly inserted into said cylinder bore (8) so as to be forward and backward movable therein,

a clamping-member (12) being disposed on the forward side of the piston (9), said clamping-member (12) being interlockingly connected to the piston (9) so as to be movable together therewith,

a clamping actuation hydraulic chamber (14) being formed in said cylinder bore (8) so as to face the backside of said piston (9),

under the retreated condition of the piston (9), said clamping-member (12) taking an unclamping state in which the clamping-member (12) is retreated to an unclamping position (Y) on the slantwise back and upper side,

to the contrary, under the advanced condition wherein said piston (9) is forward actuated by a hydraulic pressure of said clamping actuation hydraulic chamber (14), said clamping-member (12) being advanced to a clamping position (X) on the slantwise fore and lower side so as to take a clamping state in which a fixed portion (2a) of a fixed member (D) in front of the housing (5) is fixedly clamped by the clamping-member (12) from above, characterized in that ;

at least the upper portion (8a) of the surrounding surface of said cylinder bore (8) is so formed as to extend to the fore portion of the housing (5) and to open in the front surface (5a) of the housing (5),

said clamping-member (12) is formed by direct protruding the upper portion of said piston (9) toward its forward side,

a spring accommodation hole (17) is formed in said piston (9) so as to backward extend from its front surface, and an unclamping spring (18) is accommodated within said spring accommodation hole (17), and

a spring retainer (21) is supported by said housing (5) at a forward side position of the piston (9), the fore end portion (18a) of said unclamping spring (18) is received by said spring retainer (21) as well as the back end portion (18b) thereof is abutted onto a spring retaining seat (23) at the backmost portion of said spring accommodation hole (17).

2. A hydraulic clamp as defined in claim 1, wherein an axis (B) of said spring accommodation hole (17) is displaced below an axis (A) of said piston (9).

3. A hydraulic clamp as defined in claim 1 or claim 2, wherein

said spring retainer (21) is supported by both side walls (6) (6) of said housing (5) in such a manner as transversely crossing said clamping member (12) and said spring accommodation hole (17), and said clamping-member (12) is provided at its lateral side portions with left and right paired admittance grooves (26) (26) so formed as to open in the front surface for preventing an interference with the spring retainer (21),

each admittance groove (26) comprises a notch groove (27) formed above the clamping surface (12a) of the clamping-member (12) facing downward and a guide groove (28) formed along the axis (A) of the piston (9), which are interconnected to each other in the forward and backward direction,

under the retreated condition of the clamping-member (12) to the unclamping position (Y), both the guide grooves (28) (28) are spaced apart from the external surrounding surface of the spring retainer (21),

and to the contrary, at the end stage of the forward actuation of the clamping-member (12) to the clamping position (X), the clamping-member (12) is guided by the respective external surrounding surfaces of both side portions (21b) (21b) of said spring retainer (21) through both the guide grooves (28) (28).

4. A hydraulic clamp as defined in any one of claims 1 through 3, wherein an inclination angle (θ) of said cylinder bore (8) is defined at an angle of 25 degree to 45 degree.

5. A hydraulic clamp as defined in any one of claims 1 through 4, wherein

insertion holes (20) (20) of said spring retainer 21 are transversely formed in the fore lower portions of both side walls (6) (6) of said housing (5), and two bolts (7) (7) for securing said housing (5) are vertically passed through said both side walls (6) (6) and are intersected with the insertion holes (20) (20) at the positions outside the opposite ends of said spring retainer (21).

FIG.3

FIG.1

## FIG.2

## FIG.4

# FIG.5

12a
12
17

# FIG.6

5a
8a
(Y)
12
12a
9  5  8
14
26
28
A
B
27
29
20  21
18
17

# FIG.7

# FIG.8

PRIOR ART

FIG.10

PRIOR ART

FIG.9